# EUROPEAN PATENT SPECIFICATION

(11) **EP 4 384 576 B1**
(45) Date of publication and mention of the grant of the patent: **28.10.2026**
(21) Application number: 22762046.5
(22) Date of filing: 08.08.2022
(51) Int. Cl.: C08L 67/04, C08L 1/02, C08L 1/08, C09D 167/00, C09J 167/00

(54) **A MATERIAL FOR MAKING PACKAGES COMPRISING A POLYHYDROXYALCANOATE RESIN MIXED WITH A VERY HIGH CONTENT OF CELLULOSE**
MATERIAL ZUR HERSTELLUNG VON VERPACKUNGEN MIT EINEM POLYHYDROXYALKANOATHARZ VERMISCHT MIT EINEM SEHR HOHEN GEHALT AN CELLULOSE
MATÉRIAU DE FABRICATION D'EMBALLAGES COMPRENANT UNE RÉSINE DE POLYHYDROXYALCANOATE MÉLANGÉE AVEC UNE TRÈS HAUTE TENEUR EN CELLULOSE

(30) Priority: 11.08.2021 EP 21190740
(43) Date of publication of application: 19.06.2024
(73) Proprietor: Société des Produits Nestlé S.A., 1800 Vevey (CH)
(72) Inventor: HAUSMANN, Michael, Karlheinz, 2012 Auvernier (CH); ZEBOUDJ, Lise, 74500 Neuvecelle (FR)
(74) Representative: Dinger, Hansjörg
(86) International application number: PCT/EP2022/072172
(87) International publication number: WO 2023/016951

(56) References cited:
- NOR AZOWA IBRAHIM ET AL: "Poly(Lactic Acid) (PLA)-reinforced Kenaf Bast Fiber Composites: The Effect of Triacetin", JOURNAL OF REINFORCED PLASTICS AND COMPOSITES, vol. 29, no. 7, 1 April 2010 (2010-04-01), US, pages 1099 - 1111, XP055876481, ISSN: 0731-6844, DOI: 10.1177/0731684409344651

## Description

### Field of the invention

The present invention concerns a material for making packages comprising a polyhydroxyalcanoate resin mixed with a very high content of cellulose, for high biodegradability and enhanced mechanical properties.

### Background of the invention

Plastic packaging is used frequently in the economy and in people's daily lives. It has multiple advantages, such as its flexibility and its light weight. Such a weight reduction contributes to fuel saving and CO₂ reduction during transport, for example. Its barrier properties help to reduce food waste due a positive effect on increasing shelf life. The barrier properties also help to secure food safety.

However, according to the European strategy for plastics in a circular economy, recently published by the European Commission, around 25.8 million tons of plastic waste are generated in Europe every year with less than 30% of such waste being collected for recycling and between 150 000 to 500 000 tons of plastic waste entering the oceans every year.

To ensure that plastic waste is reduced, significant efforts are made in the industry and in commerce. Supermarkets and shops tend to replace plastic bags by paper bags, for example. However, replacing plastics with paper in food packaging is not an easy task due to the fact that paper is a sensitive material to moisture, to grease, and many other ingredients present in edible products. Also, paper is not barrier to oxygen, moisture or liquids, which is incompatible with the requirement for an extended shelf life for most food or beverage products. Furthermore, a change in packaging material must not compromise consumer safety. The packaging must serve to protect the food but must also be robust enough to be handled by machines during the production process and must allow that the food product is presented effectively.

In replacement of non-renewable plastics, new polymers have ben found, which originate from renewal resources, and can provide similar characteristics to classic polymer such as for instance polyolefins.

Polyhydroxyalcanoates (PHA) are one type of bio-sourced polymers produced naturally by bacteria, which provide interesting features for food packaging. By convention in the following description, and in order to simplify the writing and reading of the present specification, polyhydroxyalcanoates in general will be referred to as "PHA", although different types of polyhydroxyalcanoates include other types than PHA.

Furthermore, PHA is a somehow biodegradable material, which makes it an environmentally friendly material for packaging food products.

Its degradation is however limited and sometime fails to pass the requirements for biodegradability in an expected time period for meeting international biodegradability standards.

Additionally, because of its slow crystallization rate, PHA requires long cycle times when processed into packages by injection moulding processes, which impacts the whole production chain.

Furthermore, when injection-moulded by conventional injection-moulding techniques, PHA has a relatively important shrinkage upon cool-down as compared to synthetic polyolefins. This renders injection moulds design and manufacturing difficult, as it requires advanced prediction of the final dimensions of the moulded items, without any guarantee that after cooling down, the injected item will not shrink in an unexpected manner that is detrimental to its function or usage.

Some solutions to the above drawbacks of PHA have therefore been developed, such as the use of inert fillers (e.g. CaCOH), to promote the nucleation or reduce the cost of PHA-based composites. However, these additives do not improve the degradability of the PHA material.

In order to solve the above problems with inert fillers, inventors in PCT application WO 2021/64422 A1 to Moving Beans Ltd. propose injection moulding of a beverage capsule from a resin of PHA, to which is added at the time of injection, a filler of cellulosic fibres of bamboo and rice husk. The cellulosic filler is introduced into the injection machine from a separate hopper than that of the resin, and is mixed to said resin by use of the filling screw of the injection press machine. It is claimed in this PCT publication that cellulosic fibres are a good alternative to mineral fillers, as they are biodegradable.

Furthermore, cellulose fibres create preferential initiation sites for bacteria to start and proceed with biodegradation within an item made of a mix of fibres and plastic resin. The more fibres, the most efficient the biodegradation process.

Also, EP1693416 and NOR AZOWA IBRAHIM ET AL: "Poly(Lactic Acid) (PLA)-reinforced Kenaf Bast Fiber Composites: The Effect of Triacetin",JOURNAL OF REINFORCED PLASTICS AND COMPOSITES, vol. 29, no. 7, 1 April 2010 (2010-04-01), pages 1099-1111, XP055876481,US disclose the use of kenaf fibres to create a mixture with biodegradable polymer that is used for injection moulding of articles, or manufacturing of films. The kenaf fibres used in the context of the invention are long fibres having a length up to 20 mm.

However, the present inventors have realized that the above prior art publication contains several important drawbacks.

First, the addition of cellulosic material from a separate feeding hopper of the injection machine, than that from which the PHA resin is fed into said injection machine, creates a risk of fire due to the heat that is generated by the injection machine itself.

Second, and importantly, the present inventors have discovered that a very high shear stress occurs within the matrix of the material constituted by the PHA resin and the cellulosic fibres, such that the overall amount of cellulosic fibres cannot be greater than a certain limit. Basically, the more fibres in the packaging material, the higher the viscosity of said material; and the higher the viscosity, the more difficult it is to process into a finished package. To be able to process the material, it is necessary to increase the temperature of the injection machine, but also the contribution of the screw that presses the molten material ingredients into the mould cavity. However, although increasing the temperature of the injection moulding machine results in a decrease in viscosity, this leads to damages to the fibres and the polymer, which is of course undesirable. Furthermore, increased contribution of the screw increases the shear stress applied to the material, which results in more heat generated and a mechanical and thermal degradation of the fibres. Last but not least, the more fibres, the more non-Newtonian (shear thinning) the material becomes. This means that the shear stress that is applied, is located at the very rim of the manufactured item, while its centre is not subject to shear stress. Therefore, strong shear stresses are localized close to the walls of the manufactured package, which can locally be subject to an important temperature increase during processing, hence causing localized damage to the material, while other areas of the same manufactured item are left without substantial damage to the material. As a result, the overall quality and mechanical resistance of the manufactured packaging item is substantially decreased which is of course also undesirable.

Third, an injection-moulded item made according to the invention disclosed in WO'422 is subject to shrinkage after cooling due to the fact that an injected item made from a resin or compound which is not stabilized, is subject to shrinking during cooling (after the injected item is ejected from the injection press). This shrinkage is undesirable because it impacts on the dimensions of the finished packaging item.

Having considered the above, there is a need for a packaging-making material adapted to manufacturing techniques for making highly biodegradable packages of various volumes, that solve the major drawbacks of the solutions already available in the prior art, as cited above.

### Summary of the invention

The objectives set out above are met with a hollow container as claimed in the appended claims, and in particular with a hollow container made of a polymeric compound, characterized in that said polymeric compound comprises:
(i) a polyhydroxyalcanoate (PHA) resin, and
(ii) hardwood cellulose fibres having a length comprised within the range of 15 µm to 150 µm, preferably within the range of 20 µm to 120 µm, and having a density of at least 1.0 g/cm3, preferably of at least 1.5 g/cm3, and said fibres being present in an amount of more than 50% wt. of the total compound weight.

The inventors have found that the length of the fibres used in the context of the invention is crucial to ensure that the compound formed therewith can be processed with the manufacturing techniques applicable with the invention, especially with extrusion blow moulding or compression moulding. If the fibres are too long (i.e. above 150 µm and above, the compound will not be processable because the long fibres will block the flow path of the compound within the manufacturing equipment.

The present invention is further directed a polymeric compound for extrusion blow moulding or compression moulding of a hollow container, wherein said polymeric compound comprises:
(i) a polyhydroxyalcanoate (PHA) resin, and
(ii) hardwood cellulose fibres having a length comprised within the range of 15 µm to 150 µm, preferably within the range of 20 µm to 120 µm, and having a density of at least 1.0 g/cm3, preferably of at least 1.5 g/cm3, and said fibres being present in an amount of more than 50% wt. of the total compound weight.

In another aspect, the present invention is directed to a process for forming a bottle for edible liquids, by extrusion blow moulding of a polymeric compound as described above, which comprises the steps of, in order:
(i) extruding a parison from a molten compound according to the invention,
(ii) placing said parison within the vicinity of a blowing mould, said mould being in an open position,
(iii) closing the blowing mould around said parison and blowing a fluid into said parison such that the parison expands and adapts to the cavities internal surfaces,
(iv) opening said mould and release the stretched parison formed into a bottle.

In yet another aspect, the invention concerns a process for forming a beverage capsule by compression moulding comprising the steps of, in order:
(i)forming a liquid or semi-liquid drop of a molten compound per the invention,
(ii) placing said molten compound drop in a mould comprising at least two cavities movable relative to one another, said mould being in open position,
(iii) closing the mould to exert a pressure onto said molten compound to form a capsule,
(iv) opening the mould and ejecting the thus formed capsule.

It is to be noted that PHA modified by chemical reaction with maleic anhydride is known from the prior art and was found in the past to bring improved grafting capabilities between the PHA and cellulose fibres. Therefore, PHA modified with maleic anhydride will advantageously be a preferred option within the scope of the present invention, although not an absolute necessity.

Last but not least, the invention is directed to the use of a compound as herein described, for the manufacture by an extrusion blow-moulding process, of a bottle suitable for containing edible liquids, or for the manufacture by a compression moulding process, of a capsule suitable for use with a beverage preparation machine.

### Detailed description of the invention

The present invention is primarily directed to a hollow container as claimed in the appended claims, and in particular with a hollow container made of a polymeric compound, characterized in that said polymeric compound comprises:
(i) a polyhydroxyalcanoate (PHA) resin, and
(ii) hardwood cellulose fibres having a length comprised within the range of 15 µm to 150 µm, preferably within the range of 20 µm to 120 µm, and having a density of at least 1.0 g/cm3, preferably of at least 1.5 g/cm3, and said fibres being present in an amount of more than 50% wt. of the total compound weight.

By "hollow container", it is meant any item having a three-dimensional shape and used for packing a an edible product for human or animal consumption. This includes the container receptacle into which the product is packed, but also any three-dimensional container element that is useful for completing the receptacle, such as for instance a receptacle closure.

By "hardwood cellulose fibres", it is meant fibres obtained from deciduous ("hardwood") trees and having a length less than 1.5 millimetres, preferably less than 0.5 mm. Hardwood cellulose fibres suitable for use in the context of the present invention are sourced from the following trees (with Latin names between brackets): ash (*Genus Fraxinus*)*,* beech (*Genus Fagus*)*,* basswood (*Genus Tilia*)*,* birch (*Genus Betula*)*,* black cherry (*Genus Prunus*)*,* black walnut / butternut (*Genus Juglans*), cottonwood (*Genus Populus*), elm (*Genus Ulmus*)*,* hackberry (*Genus Celtis*)*,* hickory (*Genus Carya*), holly (*Genus Ilex*)*,* locust (*Genus Robinia; Genus Gleditsia*)*,* magnolia (*Genus Magnolia*)*,* maple (Genus Acer), oak (*Genus Quercus*)*,* poplar (*Genus Populus*)*,* red alder (*Genus Alnus*)*,* royal paulownia (*Genus Paulownia*)*,* sassafras (*Genus Sassafras*)*,* sweetgum (*Genus Liquidambar*), sycamore (*Genus Platanus*), tupelo (*Genus Nyssa*)*,* willow (*Genus Salix*), yellow-poplar (*Genus Liriodendron*)*,* eucalyptus, or a combination thereof.

The fibers are not compatibilized, i.e. not treated chemically to enhance their compatibility with another ingredient.

According to the principles of the present invention, it is now possible to obtain hollow containers of various volumes (in particular large volume containers), said containers made out of a single-layer compound of polyhydroxyalcanoate and cellulose fibres, and having low shrinkage and improved biodegradation properties. This is made possible by using a compound of PHA and cellulosic fibres in a compression moulding or extrusion-blow-moulding process, which creates less shear and degradation of the fibres, such that the compound can contain a higher amount of cellulosic fibres than items produced by mixing PHA and cellulosic fibres in conventional injection-moulding processes. Furthermore, the presence in the compound formulation of fibres having a high density, allows to produce packages without shrinkage upon cooling, thus having even and reproducible dimensional stability.

Further, the compound of PHA and fibres according to the present invention is manufactured to produce ready-to-use granules or pellets, that can be processed directly into machines for the production of hollow containers by extrusion-blow-moulding or compression-moulding. With such a ready-to-use compound under the form of pellets or granules, the need for adding fibres under the form of a powder, in an opened hoper and separately from the PHA resin, is removed. Generally, powders have high specific surface, which means they have a high reactivity and are prone to explosion or fire when subject to heat or friction, as it is the case in mixing such powders with other ingredients into a screw mixer. In this case, because of the absence of cellulose powder (cellulose is already mixed with the resin at the time of the manufacturing the containers), the container manufacturing process is fully compliant in terms of safety.

Furthermore, in the present invention, the density of the fibres which compose the compound, is such that shrinkage of the manufactured item does not occur upon cooling. Such fibres are also food safe, which makes the packaging items compatible to contain edible products.

Preferably, the polymeric compound according to the present invention, and the packages made therefrom, are home compostable. Home compostability means that said compound and said packages must achieve at least 90% biodegradation, over a 12 month period at ambient temperature (25 ± 5 °C) and 90 % of disintegration after 6 months at ambient temperature (25 ± 5 °C), in accordance with home compostability standards: EN 13432, AS 5810, NF T 51800, prEN17427.

It also must meet the ecotoxicity and chemical analysis levels described in the above mention standards.

Therefore, in a highly preferred embodiment of the invention, the polyhydroxyalcanoate fraction of the compound, and of the resulting packaging, is a poly3-hydroxybutyrate-co-3-hydroxyhexanoate (PHBH).

PHBH is a polyester similar to polyethylene (PE) and polypropylene (PP) and has excellent biodegradable property in various different conditions. For examples, it is compostable at ambient temperature (home compostability), and also biodegradable in soil and sea water. As an alternative resin to polyolefins like polyethylene (PE) or polypropylene (PP), PHBH can be used in a variety of applications. The most suitable applications are difficult to recollect and sort after use, such as agricultural mulch-film, food packaging, bin liner, fishnet, etc. Moreover, PHBH could contribute to solving the issue of plastic waste in developing countries since PHBH decomposes into carbon dioxide and water over time when exposed to microorganisms.

PHBH is produced by microbial fermentation with plant oils as its carbon sources. PHBH can be processed into various plastic products by commonly used equipment. After use, PHBH biodegrades in the presence of microorganism into carbon dioxide and water. In other words, PHBH creates a carbon neutral system. Moreover, its biodegradability in sea water provides a great solution to the problem of marine microplastic pollution, which has become a major global issue.

PHBH has excellent biodegradability under aerobic, anaerobic, aquatic and composting conditions and is proven to be an environment-friendly plastic.

In aerobic conditions, and when tested according to ISO14855 standard, PHBH shows a higher level of biodegradability than cellulose. PHBH transforms via biodegradation to reusable resources such as compost and methane gas.

With two grades, 151C as flexible type and X131A as rigid type, PHBH can be usable for a variety of applications. PHBH has better gas and moisture barrier properties compared to other biodegradable polymers.

The hollow container according to the invention is preferably a bottle for containing an edible liquid, said bottle made by blow moulding of an extruded parison, said parison being stretched in at least one of the longitudinal or transversal directions.

Alternatively, said hollow container can be a capsule (or a pod or a pad) for containing a beverage precursor ingredient, for the preparation of a beverage in a beverage preparation machine, said capsule being formed by compression moulding.

The present invention is further directed a polymeric compound for extrusion blow moulding or compression moulding of a hollow container, wherein said polymeric compound comprises:
(i) a polyhydroxyalcanoate (PHA) resin, and
(ii) hardwood cellulose fibres having a length comprised within the range of 15 µm to 150 µm, preferably within the range of 20 µm to 120 µm, and having a density of at least 1.0 g/cm3, preferably of at least 1.5 g/cm3, and said fibres being present in an amount of more than 50% wt. of the total compound weight.

In the context of the present invention, the polyhydroxyalcanoate (PHA) resin that can be used for making the compound that will be used for manufacturing a hollow container, is selected within the list of: poly3-hydroxybutyrate-co-3-hydroxyhexanoate (PHBH), poly-3-hydroxybutyrate-co-3-hydroxyvalerate (PHBV), poly-3-hydroxybutyrate (PHB), poly-3-hydroxyvalerate (PHV), or poly-3-hydroxyhexanoate (PHHx), and derivatives or combinations thereof.

In one possible embodiment of the invention, the PHA resin selected from the list mentioned above, can be completed by a certain amount of at least a second polymer selected within the list of: polybutylene adipate terephthalate (PBAT), polypropylene glycol (PG), polyvinyl alcohol (PVA), starch, or a combination thereof.

The compound also preferably comprises at least one plasticizer. Any plasticizer generally used with polyhydroxyalcanoates processing can be used, but some are preferred which can be selected within the list of: lecithin, mannitol, polyesters, sebacates, citrates, fatty acids, fatty alcohols, fatty esters of adipic, succinic, or glucaric acids, lactates, alkyl diesters, citrates, alkyl methyl esters, dibenzoates, propylene carbonate, caprolactone diols having a number average molecular weight from 200-10,000 g/mol, polyethylene glycols having a number average molecular weight of 400-10,000 g/mol, esters of vegetable oils such as for example soybean oils, long chain alkyl acids, adipates, glycerol, isosorbide derivatives, surfactants, terpene D-limonene (LIM), tri(ethylene glycol)bis(2-ethylhexanoate) (TEGB), tributyrin, triethanolamine (TEA), triethyl citrate (TEC), trilaurin, urea, water, waxes, aliphatic dicarboxylic acids (such as for example oxalic, succinic, sebacic or adipic acids), or mixtures thereof.

Furthermore, the compound used for manufacturing a container according to the invention, can advantageously comprise at least one nucleating agent. Any nucleating agent that is traditionally used for processing PHA can be used, but preferably selected nucleating agents are chosen from the group consisting of: sulphur, polyvinylpyrrolidone (PVP), erythritols, pentaerythritol, dipentaerythritols, artificial sweeteners such as saccharine, orotic acid, stearates, sorbitols, mannitols, polyester waxes, chitin, cyclodextrin-complex, cyclohexylphosphonic acid/zinc-stearate, dibasic acids, inorganic metal salts, organic metal salts, organic phosphonic acid based system, starch, compounds having a 2:1/2:1 crystal chemical structure, and mixtures thereof.

The compound suitable for use in the context of the present invention may also further comprise a chain extender preferably selected within the list of: anhydride, carbodiimide, carboxylic acid salts, epoxide, isocyanate, at least one mineral filler, at least one mineral oil, peroxide, or a combination thereof.

### Examples

### Example 1:

| **Ingredient** | **Characteristics** | **Amount (wt% of the total compound weight)** |
|---|---|---|
| Cellulose fibers | Length: 40 µm average | 51% |
| | Density: 1.56 | |
| PHA | 50% | 40% |
| plasticizer | PHBH | 7% |
| Nucleating agent | Biodegradable polyester | 2% |

A compound is prepared from the ingredients list above, and is then processed into a bottle for containing mineral water. The bottle is manufactured by blow moulding of an extruded parison according to a generally state-of-the-art extrusion-moulding process, said parison being stretched in both longitudinal or transversal directions. The bottle thus obtained is suitable for containing a volume of 1 litre of mineral water.

### Example 2:

| **Ingredient** | **Characteristics** | **Amount (wt% of the total compound weight)** |
|---|---|---|
| Cellulose fibers | Length: 100 µm average | 60 % |
| | Density: 1.56 | |
| PHA | PHBH | 17% |
| plasticizer | Bio-polyester | 7% |
| Nucleating agent | CaCo3 | 9% |
| Other | PBSA | 7% |

A compound is prepared from the ingredients list above, and is then processed into a closure for capping/closing a bottle. The closure is manufactured by compression moulding according to known techniques (manufacturing settings can be adapted to the compound characteristics, within the frame of customary practice).

## Claims

1. A hollow container made of a polymeric compound, **characterized in that** said polymeric compound comprises:
(i) a polyhydroxyalcanoate (PHA) resin, and
(ii) hardwood cellulose fibres having a length comprised within the range of 15 µm to 150 µm, preferably within the range of 20 µm to 120 µm, and having a density of at least 1.0 g/cm3, preferably of at least 1.5 g/cm3, and said fibres being present in an amount of more than 50% wt. of the total compound weight.

2. A hollow container according to claim 1, which is extrusion-blow-moulded or compression-moulded.

3. A hollow container according to claims 1 or 2, wherein said polyhydroxyalcanoate resin is selected within the list of: poly3-hydroxybutyrate-co-3-hydroxyhexanoate (PHBH), poly-3-hydroxybutyrate-co-3-hydroxyvalerate (PHBV), poly-3-hydroxybutyrate (PHB), poly-3-hydroxyvalerate (PHV), or poly-3-hydroxyhexanoate (PHHx), and derivatives or combinations thereof.

4. A hollow container according to any one of the preceding claims 1 to 3, which is a bottle for containing an edible liquid, said bottle made by blow moulding of an extruded parison, said parison being stretched in at least one of the longitudinal or transversal directions.

5. A hollow container according to any one of the preceding claims 1 to 3, which is capsule for containing a beverage precursor ingredient for the preparation of a beverage in a beverage preparation machine, said capsule being formed by compression moulding.

6. A hollow container according to any one of the preceding claims, wherein the hardwood fibres are sourced from the following trees: ash (*Genus Fraxinus*), beech (*Genus Fagus*)*,* basswood (*Genus Tilia*)*,* birch (*Genus Betula*)*,* black cherry (*Genus Prunus*)*,* black walnut / butternut (*Genus Juglans*), cottonwood (*Genus Populus*), elm (*Genus Ulmus*)*,* hackberry (*Genus Celtis*)*,* hickory (*Genus Carya*)*,* holly (*Genus Ilex*)*,* locust (*Genus Robinia; Genus Gleditsia*)*,* magnolia (*Genus Magnolia*)*,* maple (Genus Acer), oak (*Genus Quercus*)*,* poplar (*Genus Populus*), red alder (*Genus Alnus*)*,* royal paulownia (*Genus Paulownia*)*,* sassafras (*Genus Sassafras*), sweetgum (*Genus Liquidambar*)*,* sycamore (*Genus Platanus*), tupelo (*Genus Nyssa*)*,* willow (*Genus Salix*)*,* yellow-poplar (*Genus Liriodendron*)*,* eucalyptus, or a combination thereof.

7. A polymeric compound for extrusion blow moulding or compression moulding of a hollow container, **characterized in that** said polymeric compound comprises:
(i) a polyhydroxyalcanoate (PHA) resin, and
(ii) hard wood cellulose fibres having a length comprised within the range of 15 µm to 150 µm, preferably within the range of 20 µm to 120 µm, and having a density of at least 1.0 g/cm3, preferably of at least 1.5 g/cm3, and said fibres being present in an amount of more than 50% wt. of the total compound weight.

8. A polymeric compound according to claim 6, wherein said polyhydroxyalcanoate resin is selected within the list of: poly3-hydroxybutyrate-co-3-hydroxyhexanoate (PHBH), poly-3-hydroxybutyrate-co-3-hydroxyvalerate (PHBV), poly-3-hydroxybutyrate (PHB), poly-3-hydroxyvalerate (PHV), or poly-3-hydroxyhexanoate (PHHx), and derivatives or combinations thereof.

9. A polymeric compound according to any of the preceding claims 7 or 8, wherein the hardwood fibres are sourced from the following trees: ash (*Genus Fraxinus*), beech (*Genus Fagus*)*,* basswood (*Genus Tilia*)*,* birch (*Genus Betula*)*,* black cherry (*Genus Prunus*)*,* black walnut / butternut (*Genus Juglans*), cottonwood (*Genus Populus*)*,* elm (*Genus Ulmus*)*,* hackberry (*Genus Celtis*), hickory (*Genus Carya*)*,* holly (*Genus Ilex*)*,* locust (*Genus Robinia; Genus Gleditsia*), magnolia (*Genus Magnolia*)*,* maple (Genus Acer), oak (*Genus Quercus*), poplar (*Genus Populus*), red alder (*Genus Alnus*)*,* royal paulownia (*Genus Paulownia*), sassafras (*Genus Sassafras*), sweetgum (*Genus Liquidambar*), sycamore (*Genus Platanus*), tupelo (*Genus Nyssa*), willow (*Genus Salix*), yellow-poplar (*Genus Liriodendron*), eucalyptus, or a combination thereof.

10. A process for forming a bottle for edible liquids, by extrusion blow moulding of a polymeric compound according to any one of the preceding claims 7 to 9, **characterized in that** it comprises the steps of, in order:
(i) Extruding a parison from a molten compound according to claims 7 to 9,
(ii) Placing said parison within the vicinity of a blowing mould, said mould being in an open position,
(iii) Closing the blowing mould around said parison and blowing a fluid into said parison such that the parison expands and adapts to the cavities internal surfaces,
(iv) Opening said mould and release the stretched parison formed into a bottle.

11. A process for forming a beverage capsule by compression moulding comprising the steps of, in order:
(i) Forming a liquid or semi-liquid drop of a molten compound according to claims 7 to 9,
(ii) Placing said molten compound drop in a mould comprising at least two cavities movable relative to one another, said mould being in open position,
(iii) Closing the mould to exert a pressure onto said molten compound to form a capsule,
(iv) Opening the mould and ejecting the thus formed capsule.

12. Use of a compound according to claims 7 to 9 for the manufacture by an extrusion blow-moulding process, of a bottle suitable for containing edible liquids.

13. Use of a compound according to claims 7 to 9 for the manufacture by a compression moulding process, of a capsule suitable for use with a beverage preparation machine.

## Patentansprüche

1. Hohler Behälter, gefertigt aus einer polymeren Verbindung,
**dadurch gekennzeichnet, dass** die polymere Verbindung umfasst:
(i) ein Polyhydroxyalkanoatharz (PHA-Harz), und
(ii) Hartholzzellulosefasern, die eine Länge aufweisen, die innerhalb des Bereichs von 15 µm bis 150 µm, vorzugsweise innerhalb des Bereichs von 20 µm bis 120 µm umfasst ist, und eine Dichte von mindestens 1,0 g/cm3, vorzugsweise von mindestens 1,5 g/cm3 aufweisen, und wobei die Fasern in einer Menge von mehr als 50 Gew.-% des Gesamtgewichts der Verbindung vorhanden sind.

2. Hohler Behälter nach Anspruch 1, der extrusionsblasgeformt oder formgepresst ist.

3. Hohler Behälter nach Anspruch 1 oder 2, wobei das Polyhydroxyalkanoatharz aus der Liste ausgewählt ist von: Poly3-hydroxybutyrat-co-3-hydroxyhexanoat (PHBH), Poly-3-hydroxybutyrat-co-3-hydroxyvalerat (PHBV), Poly-3-hydroxybutyrat (PHB), Poly-3-hydroxyvalerat (PHV) oder Poly-3-hydroxyhexanoat (PHHx) und Derivaten oder Kombinationen davon.

4. Hohler Behälter nach einem der vorstehenden Ansprüche 1 bis 3, der eine Flasche zum Aufnehmen einer genießbaren Flüssigkeit ist, wobei die Flasche durch Blasformen eines extrudierten Vorformlings gefertigt ist, wobei der Vorformling in mindestens einer der Längs- oder Querrichtung gestreckt wird.

5. Hohler Behälter nach einem der vorstehenden Ansprüche 1 bis 3, der eine Kapsel zum Aufnehmen einer Getränkevorläuferzutat für die Zubereitung eines Getränks in einer Getränkezubereitungsmaschine ist, wobei die Kapsel durch Formpressen ausgebildet ist.

6. Hohler Behälter nach einem der vorstehenden Ansprüche, wobei die Hartholzfasern von den folgenden Bäumen stammen: Esche *(Gattung Fraxinus),* Buche *(Gattung Fagus),* Linde *(Gattung Tilia),* Birke *(Gattung Betula),* Schwarzkirsche *(Gattung Prunus),* Schwarznuss / Butternuss *(Gattung Juglans),* Pappel *(Gattung Populus),* Ulme *(Gattung Ulmus),* Zürgelbaum *(Gattung Celtis),* Hickory *(Gattung Carya),* Stechpalme *(Gattung Ilex),* Robinie *(Gattung Robinia; Gattung Gleditsia),* Magnolie *(Gattung Magnolia),* Ahorn (Gattung Acer), Eiche *(Gattung Quercus),* Pappel *(Gattung Populus),* Roterle *(Gattung Alnus),* Blauglockenbaum *(Gattung Paulownia),* Sassafras *(Gattung Sassafras),* Amberbaum *(Gattung Liguidambar),* Platane *(Gattung Platanus),* Tupelo *(Gattung Nyssa),* Weide *(Gattung Salix),* Tulpenbaum *(Gattung Liriodendron),* Eukalyptus oder eine Kombination davon.

7. Polymere Verbindung zum Extrusionsblasformen oder Formpressen eines hohlen Behälters, **dadurch gekennzeichnet, dass** die polymere Verbindung umfasst:
(i) ein Polyhydroxyalkanoatharz (PHA-Harz), und
(ii) Hartholzcellulosefasern, die eine Länge aufweisen, die innerhalb des Bereichs von 15 µm bis 150 µm, vorzugsweise innerhalb des Bereichs von 20 µm bis 120 µm umfasst ist, und eine Dichte von mindestens 1,0 g/cm3, vorzugsweise von mindestens 1,5 g/cm3 aufweisen, und wobei die Fasern in einer Menge von mehr als 50 Gew.-% des Gesamtgewichts der Verbindung vorhanden sind.

8. Polymere Verbindung nach Anspruch 6, wobei das Polyhydroxyalkanoatharz ausgewählt ist aus der Liste von: Poly3-hydroxybutyrat-co-3-hydroxyhexanoat (PHBH), Poly-3-hydroxybutyrat-co-3-hydroxyvalerat (PHBV), Poly-3-hydroxybutyrat (PHB), Poly-3-hydroxyvalerat (PHV) oder Poly-3-hydroxyhexanoat (PHHx) und Derivaten oder Kombinationen davon.

9. Polymere Verbindung nach einem der vorstehenden Ansprüche 7 oder 8, wobei die Hartholzfasern von den folgenden Bäumen stammen: Esche *(Gattung Fraxinus),* Buche *(Gattung Fagus),* Linde *(Gattung Tilia),* Birke *(Gattung Betula),* Schwarzkirsche *(Gattung Prunus),* Schwarznuss / Butternuss *(Gattung Juglans),* Pappel *(Gattung Populus),* Ulme *(Gattung Ulmus),* Zürgelbaum *(Gattung Celtis),* Hickory *(Gattung Carya),* Stechpalme *(Gattung Ilex),* Robinie *(Gattung Robinia; Gattung Gleditsia),* Magnolie *(Gattung Magnolia),* Ahorn (Gattung Acer), Eiche *(Gattung Quercus),* Pappel *(Gattung Populus),* Roterle *(Gattung Alnus),* Blauglockenbaum *(Gattung Paulownia),* Sassafras *(Gattung Sassafras),* Amberbaum *(Gattung Liguidambar),* Platane *(Gattung Platanus),* Tupelo *(Gattung Nyssa),* Weide *(Gattung Salix),* Tulpenbaum *(Gattung Liriodendron),* Eukalyptus oder eine Kombination davon.

10. Verfahren zum Ausbilden einer Flasche für genießbare Flüssigkeiten durch Extrusionsblasformen einer polymeren Verbindung nach einem der vorstehenden Ansprüche 7 bis 9, **dadurch gekennzeichnet, dass** es in dieser Reihenfolge die folgenden Schritte umfasst:
(i) Extrudieren eines Vorformlings aus einer geschmolzenen Verbindung nach den Ansprüchen 7 bis 9,
(ii) Anordnen des Vorformlings in der Nähe einer Blasform, wobei die Form in einer geöffneten Position ist,
(iii) Schließen der Blasform um den Vorformling und Einblasen eines Fluids in den Vorformling, derart, dass der Vorformling expandiert und sich an die Innenoberflächen der Kavitäten anpasst,
(iv) Öffnen der Form und Freigeben des zu einer Flasche geformten gestreckten Vorformlings.

11. Verfahren zum Ausbilden einer Getränkekapsel durch Formpressen, umfassend die Schritte, in dieser Reihenfolge:
(i) Ausbilden eines flüssigen oder halbflüssigen Tropfens einer geschmolzenen Verbindung nach den Ansprüchen 7 bis 9,
(ii) Anordnen des Tropfens der geschmolzenen Verbindung in einer Form, umfassend mindestens zwei relativ zueinander bewegliche Kavitäten, wobei die Form in einer offenen Position ist,
(iii) Schließen der Form, um einen Druck auf die geschmolzene Masse auszuüben, um eine Kapsel auszubilden,
(iv) Öffnen der Form und Auswerfen der so ausgebildeten Kapsel.

12. Verwendung einer Verbindung nach den Ansprüchen 7 bis 9 für die Herstellung, durch ein Extrusionsblasformverfahren, einer Flasche, die zum Aufnehmen von genießbaren Flüssigkeiten geeignet ist.

13. Verwendung einer Verbindung nach den Ansprüchen 7 bis 9 für die Herstellung, durch ein Formpressverfahren, einer Kapsel, die zum Verwenden mit einer Getränkezubereitungsmaschine geeignet ist.

## Revendications

1. Récipient creux constitué d'un composé polymère, **caractérisé en ce que** ledit composé polymère comprend :
(i) une résine de polyhydroxyalcanoate (PHA), et
(ii) des fibres de cellulose de feuillu ayant une longueur comprise au sein de la plage de 15 µm à 150 µm, de préférence au sein de la plage de 20 µm à 120 µm, et ayant une masse volumique d'au moins 1,0 g/cm3, de préférence d'au moins 1,5 g/cm3, et lesdites fibres étant présentes en une quantité de plus de 50 % en poids du poids total de composé.

2. Récipient creux selon la revendication 1, qui est moulé par extrusion-soufflage ou moulé par compression.

3. Récipient creux selon les revendications 1 ou 2, dans lequel ladite résine de polyhydroxyalcanoate est choisie dans la liste de : poly3-hydroxybutyrate-co-3-hydroxyhexanoate (PHBH), poly-3-hydroxybutyrate-co-3-hydroxyvalérate (PHBV), poly-3-hydroxybutyrate (PHB), poly-3-hydroxyvalérate (PHV), ou poly-3-hydroxyhexanoate (PHHx), et dérivés ou combinaisons de ceux-ci.

4. Récipient creux selon l'une quelconque des revendications 1 à 3 précédentes, qui est une bouteille destinée à contenir un liquide comestible, ladite bouteille étant fabriquée par moulage par soufflage d'une paraison extrudée, ladite paraison étant étirée dans au moins l'une des directions longitudinale ou transversale.

5. Récipient creux selon l'une quelconque des revendications 1 à 3 précédentes, qui est une capsule destinée à contenir un ingrédient précurseur de boisson pour la préparation d'une boisson dans une machine de préparation de boisson, ladite capsule étant formée par moulage par compression.

6. Récipient creux selon l'une quelconque des revendications précédentes, dans lequel les fibres de feuillu proviennent des arbres suivants : frêne (*genre Fraxinus*), hêtre (*genre Fagus*), tilleul (*genre Tilia*), bouleau (*genre Betula*), cerisier noir (*genre Prunus*), noyer noir/noyer cendré (*genre Juglans*), peuplier d'Amérique (*genre Populus*), orme (*genre Ulmus*), micocoulier (*genre Celtis*), caryer (*genre Carya*), houx (*genre Ilex*), robinier (*genre Robinia ; genre Gleditsia*), magnolia (*genre Magnolia*), érable (*genre Acer*), chêne (*genre Quercus*), peuplier (*genre Populus*), aulne rouge (*genre Alnus*), paulownia royal (*genre Paulownia*), sassafras (*genre Sassafras*), liquidambar (*genre Liguidambar*), sycomore (*genre Platanus*), tupelo (*genre Nyssa*), saule (*genre Salix*), tulipier d'Amérique (*genre Liriodendron*), eucalyptus, ou une combinaison de ceux-ci.

7. Composé polymère destiné à un moulage par extrusion-soufflage ou un moulage par compression d'un récipient creux, **caractérisé en ce que** ledit composé polymère comprend :
(i) une résine de polyhydroxyalcanoate (PHA), et
(ii) des fibres de cellulose de feuillu ayant une longueur comprise au sein de la plage de 15 µm à 150 µm, de préférence au sein de la plage de 20 µm à 120 µm, et ayant une masse volumique d'au moins 1,0 g/cm3, de préférence d'au moins 1,5 g/cm3, et lesdites fibres étant présentes en une quantité de plus de 50 % en poids du poids total de composé.

8. Composé polymère selon la revendication 6, dans lequel ladite résine de polyhydroxyalcanoate est choisie dans la liste de : poly3-hydroxybutyrate-co-3-hydroxyhexanoate (PHBH), poly-3-hydroxybutyrate-co-3-hydroxyvalérate (PHBV), poly-3-hydroxybutyrate (PHB), poly-3-hydroxyvalérate (PHV), ou poly-3-hydroxyhexanoate (PHHx), et dérivés ou combinaisons de ceux-ci.

9. Composé polymère selon l'une quelconque des revendications 7 ou 8, dans lequel les fibres de feuillu proviennent des arbres suivants : frêne (*genre Fraxinus*), hêtre (*genre Fagus*), tilleul (*genre Tilia*), bouleau (*genre Betula*), cerisier noir (*genre Prunus*), noyer noir/noyer cendré (*genre Juglans*), peuplier d'Amérique (*genre Populus*), orme (*genre Ulmus*), micocoulier (*genre Celtis*), caryer (*genre Carya*), houx (*genre Ilex*), robinier (*genre Robinia ; genre Gleditsia*), magnolia (*genre Magnolia*), érable (*genre Acer*), chêne (*genre Quercus*), peuplier (*genre Populus*), aulne rouge (*genre Alnus*), paulownia royal (*genre Paulownia*), sassafras (*genre Sassafras*), liquidambar (*genre Liguidambar*), sycomore (*genre Platanus*), tupelo (*genre Nyssa*), saule (*genre Salix*), tulipier d'Amérique (*genre Liriodendron*), eucalyptus, ou une combinaison de ceux-ci.

10. Procédé de formation d'une bouteille destinée à des liquides comestibles, par moulage par extrusion-soufflage d'un composé polymère selon l'une quelconque des revendications 7 à 9 précédentes, **caractérisé en ce qu'**il comprend les étapes consistant à, dans l'ordre :
(i) Extruder une paraison à partir d'un composé fondu selon les revendications 7 à 9,
(ii) Placer ladite paraison au voisinage d'un moule de soufflage, ledit moule étant dans une position ouverte,
(iii) Fermer le moule de soufflage autour de ladite paraison et souffler un fluide dans ladite paraison de telle sorte que la paraison se dilate et s'adapte aux surfaces de cavités internes,
(iv) Ouvrir ledit moule et libérer la paraison étirée formée en une bouteille.

11. Procédé de formation d'une capsule de boisson par moulage par compression comprenant les étapes consistant à, dans l'ordre :
(i) Former une goutte liquide ou semi-liquide d'un composé fondu selon les revendications 7 à 9,
(ii) Placer ladite goutte de composé fondu dans un moule comprenant au moins deux cavités mobiles l'une par rapport à l'autre, ledit moule étant en position ouverte,
(iii) Fermer le moule afin d'exercer une pression sur ledit composé fondu pour former une capsule,
(iv) Ouvrir le moule et éjecter la capsule ainsi formée.

12. Utilisation d'un composé selon les revendications 7 à 9 pour la fabrication, par un procédé de moulage par extrusion-soufflage, d'une bouteille appropriée pour contenir des liquides comestibles.

13. Utilisation d'un composé selon les revendications 7 à 9 pour la fabrication, par un procédé de moulage par compression, d'une capsule appropriée pour une utilisation avec une machine de préparation de boisson.
